# EUROPÄISCHE PATENTSCHRIFT

(11) **EP 4 259 464 B1**
(45) Veröffentlichungstag und Bekanntmachung des Hinweises auf die Patenterteilung: **24.07.2024**
(21) Anmeldenummer: 22839819.4
(22) Anmeldetag: 20.12.2022
(51) Int. Cl.: B60K 1/04, H01M 50/383

(54) **KUNSTSTOFFBAUTEIL, INSBESONDERE UNTERFAHRSCHUTZ, MIT BRANDSCHUTZTEXTIL FÜR EIN ZUMINDEST TEILWEISE ELEKTRISCH ANGETRIEBENES KRAFTFAHRZEUG**
PLASTIC COMPONENT, IN PARTICULAR UNDERRIDE PROTECTION, WITH FIRE PROTECTION TEXTILE FOR AN AT LEAST PARTIALLY ELECTRICALLY PROPELLED VEHICLE
COMPOSANT EN PLASTIQUE, NOTAMMENT PROTECTION DE BAS DE CAISSE, AVEC TEXTILE DE PROTECTION CONTRE L'INCENDIE POUR UN VÉHICULE AUTOMOBILE À ENTRAÎNEMENT AU MOINS PARTIELLEMENT ÉLECTRIQUE

(30) Priorität: 20.12.2021 DE 102021133799
(43) Veröffentlichungstag der Anmeldung: 18.10.2023
(73) Patentinhaber: AUDI AG, 85057 Ingolstadt (DE)
(72) Erfinder: RAUSCH, Julius, 74074 Heilbronn (DE)
(86) Internationale Anmeldenummer: PCT/EP2022/086836
(87) Internationale Veröffentlichungsnummer: WO 2023/118034

(56) Entgegenhaltungen:
- WO-A1-2020/120076
- WO-A1-2020/224954
- DE-A1- 102021 100 846

## Beschreibung

Die Erfindung betrifft Kunststoffbauteil für ein zumindest teilweise elektrisch angetriebenes Kraftfahrzeug mit einer Grundplatte aus einem ersten Kunststoffmaterial und mit mehreren von der Grundplatte vorstehenden Stützabschnitten, die dazu eingerichtet sind, das Kunststoffbauteil an einer durch das Kunststoffbauteil zu schützenden Fahrzeugkomponente abzustützen. Ferner betrifft die Erfindung einen Unterfahrschutz und ein zumindest teilweise elektrisch angetriebenes Kraftfahrzeug mit einem solchen Unterfahrschutz.

Ein derartiges Kunststoffbauteil wird in zumindest teilweise elektrisch angetriebenen Kraftfahrzeugen insbesondere im Bereich einer Batteriespeichereinrichtung zu deren Abdeckung nach oben zu Strukturbauteilen der Karosserie bzw. zu einem Fahrzeuginnenraum hin oder nach unten zu einem Untergrund hin eingesetzt. Bei solchen Batteriespeichereinrichtung kann es in seltenen Fällen vorkommen, dass eine Batteriezelle entgast, wobei heißes Gas austritt.

Aus dem Stand der Technik sind in Bezug auf Schutzmaßnahmen im Zusammenhang mit Batteriespeichereinrichtung unterschiedliche Ansätze bekannt. Es wird hierzu beispielhaft auf folgende Dokumente verwiesen: WO 2020/224954 A1, DE 10 2021 100846 A1, WO 2020/120076 A1, DE 10 2019 130 097 A1, DE 10 2017 000 265 A1, DE 42 32 961 A1 und DE 10 2008039 866 A1.

Die der Erfindung zu Grunde liegende Aufgabe wird darin gesehen, ein Kunststoffbauteil anzugeben, das auch als Schutzelement für den Fall von austretendem Heißgas dienen kann, wobei es insbesondere auch als Unterfahrschutz einsetzbar ist.

Diese Aufgabe wird gelöst durch ein Kunststoffbauteil, ein Unterfahrschutz und ein Kraftfahrzeug mit den Merkmalen der jeweiligen unabhängigen Patentansprüche. Vorteilhafte Ausgestaltungen mit zweckmäßigen Weiterbildungen sind in den abhängigen Patentansprüchen angegeben.

Vorgeschlagen wird also ein Kunststoffbauteil für ein zumindest teilweise elektrisch angetriebenes Kraftfahrzeug mit einer Grundplatte aus einem ersten Kunststoffmaterial; und mit mehreren von der Grundplatte vorstehenden Stützabschnitten, die dazu eingerichtet sind, das Kunststoffbauteil an einer durch das Kunststoffbauteil zu schützenden Fahrzeugkomponente abzustützen. Dabei ist vorgesehen, dass das Kunststoffbauteil wenigstens ein flächiges Brandschutztextil aufweist, das zwischen vorstehenden Stützabschnitten angeordnet und mit der Grundplatte materialschlüssig verbunden ist.

Hierdurch kann das Kunststoffbauteil insbesondere in Bereichen, in den ein Brandschutztextil angeordnet ist, gegen den Austritt von Heißgas geschützt werden.

Bei dem Kunststoffbauteil kann das Brandschutztextil als flächiger Streifen ausgebildet sein und eine Streifenlänge aufweisen, die etwa 75% bis 98% der Länge der Grundplatte entspricht. Dabei kann der flächige Streifen eine Streifenlänge von mindestens 100cm und eine Streifenbreite von mindestens 5cm aufweisen. Ferner ist es möglich, dass an der Grundplatte mehrere solche Streifen aus Brandschutztextilmaterial parallel zueinander angeordnet sind.

Alternativ kann bei dem Kunststoffbauteil die Grundplatte mehrere sich kreuzende Stützabschnitte aufweisen, derart dass die sich kreuzenden Stützabschnitte vieleckige Einfassungen bilden, wobei in mehreren oder allen Einfassungen ein jeweiliges flächiges Brandschutztextil angeordnet ist. Dabei kann ein in einer Einfassung angeordnetes Brandschutztextil eine Textilbreite von mindestens 5cm und eine Textillänge von mindestens 15cm aufweisen. Die sich kreuzenden Stützabschnitte können beispielsweise eine Art regelmäßiges Raster von Einfassungen bilden, so dass auf der Grundplatte auch flächige Brandschutztextile in einem solchen regelmäßigen Raster angeordnet sein können.

Bei dem Kunststoffbauteil können die Stützabschnitte aus glasfaserverstärktem Kunststoff hergestellt sein, und insbesondere in einem Spritzgussverfahren oder eine Fließpressverfahren mit der Grundplatte ausgebildet sein.

Das Brandschutztextil kann insbesondere nicht brennbare mineralische Fasern enthalten, wie beispielsweise Glasfasern oder/und Kohlefasern oder/und Basaltfasern und dergleichen. Ferner kann das Brandschutztextil eine dichte bzw. kompakte Struktur aufweisen, wobei es als Gewebe, Matte, Vlies oder Gelege mit unterschiedlichen Flächengewichten ausgeführt sein kann.

Vorgeschlagen wird weiter ein Unterfahrschutz für ein zumindest teilweise elektrisch angetriebenes Kraftfahrzeug, wobei der Unterfahrschutz als oben beschriebenes Kunststoffbauteil ausgeführt ist. Ein solcher Unterfahrschutz ist dabei insbesondere an einer Unterseite einer Batteriespeichereinrichtung angebracht.

Vorgeschlagen wird auch ein Kraftfahrzeug mit zumindest teilweise elektrischem Antrieb und einer Batteriespeichereinrichtung, wobei das Kraftfahrzeug einen solchen Unterfahrschutz aufweist, der unterhalb der Batteriespeichereinrichtung angeordnet und mittelbar oder unmittelbar mit dieser verbunden ist, und wobei die Stützabschnitte des Unterfahrschutzes der Batteriespeichereinrichtung zugewandt und an dieser abgestützt sind.

Bei dem Kraftfahrzeug kann die Batteriespeichereinrichtung mehrere Batteriezellen aufweisen, die eine jeweilige Entgasungsöffnung aufweisen, wobei die Entgasungsöffnungen an einer Unterseite der Batteriezellen angeordnet sind.

Bei dem Kraftfahrzeug kann der Unterfahrschutz derart ausgeführt sein, dass jeder der nach unten ausgerichteten Entgasungsöffnungen ein jeweiliges Brandschutztextil gegenüber angeordnet ist oder dass mehreren nach unten ausgerichteten Entgasungsöffnungen ein gemeinsames Brandschutztextil gegenüber angeordnet ist.

Mit anderen Worten kann beispielsweise ein streifenartig ausgeführtes Brandschutztextil, wie es oben beschrieben worden ist, mehreren entlang des Streifens angeordneten Entgasungsöffnungen von Batteriezellen gegenüber liegen. Bezogen auf eine Breitenrichtung des Streifens können die Entgasungsöffnungen mittig gegenüber dem Streifen angeordnet sein.

Alternativ bei mehreren rasterartig an dem Unterfahrschutz angeordnete Brandschutztextilen einer jeweiligen Entgasungsöffnung einer Batteriezelle ein flächiges Brandschutztextil zugeordnet sein und gegenüber liegen. Dabei können die Entgasungsöffnungen und die zugeordneten Brandschutztextile insbesondere im Wesentlichen zentriert zueinander ausgerichtet sein, insbesondere so dass, die Entgasungsöffnung einem gedachten Flächenschwerpunkt des Brandschutztextils gegenüber liegt.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: zeigt in den Teilfiguren A) und B) vereinfachte und schematische Beispiele von Kunststoffbauteilen in einer Draufsicht, sowie in den Teilfiguren C) und D) zugehörige Schnittdarstellungen entsprechend den angegebenen Schnittlinien C-C und D-D.;
- Fig. 2: zeigt eine vereinfachte und schematische Schnittdarstellung, etwa entsprechend einer Darstellung der Fig. 1C von einem Kunststoffbauteil, das als Unterfahrschutz unterhalb einer Batteriespeichereinrichtung angeordnet ist;
- Fig. 3: zeigt eine vereinfachte und schematische Ansicht eine zumindest teilweise elektrisch angetriebenen Kraftfahrzeugs mit einer Batteriespeichereinrichtung und einem Unterfahrschutz.

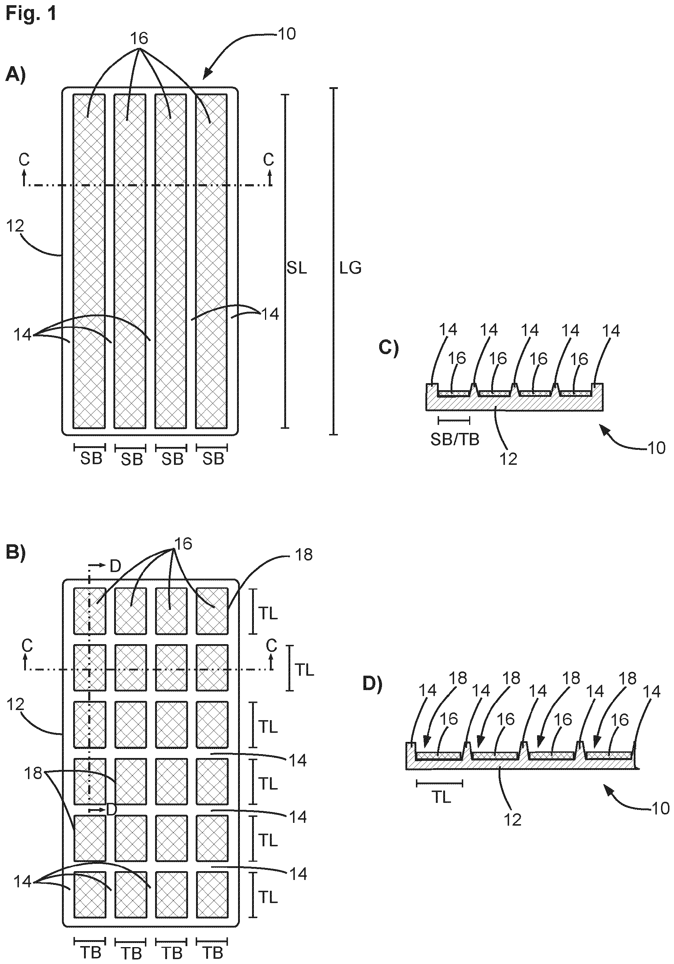

Fig. 1 zeigt in den Teilfiguren A) und B) zwei Beispiele eines Kunststoffbauteils 10 in einer vereinfachten und schematischen Draufsicht. In den Teilfiguren C) und D) sind zugehörige Schnittdarstellungen enthalten. Nachfolgend wird auf die Gesamtheit der Teilfiguren A) bis D) der Fig. 1 Bezug genommen, um die Kunststoffbauteile 10 genauer zu beschreiben.

Die Kunststoffbauteile 10 weisen eine jeweilige Grundplatte 12 auf, die aus einem ersten Kunststoffmaterial hergestellt sind. Ferner umfassen die Kunststoffbauteile 10 jeweils mehrere von der Grundplatte 12 vorstehenden Stützabschnitte 14. Die Stützabschnitte 14 sind insbesondere dazu eingerichtet, das Kunststoffbauteil 10 an einer durch das Kunststoffbauteil 10 zu schützenden Fahrzeugkomponente abzustützen.

Die Kunststoffbauteile 10 umfassen jeweils mehrere flächige Brandschutztextile 16, die jeweils zwischen vorstehenden Stützabschnitten 14 angeordnet und mit der Grundplatte 12 materialschlüssig verbunden sind.

In dem Beispiel der Fig. 1A sind die Brandschutztextile 16 als flächige Streifen ausgebildet. Dabei weisen die streifenartigen Brandschutztextile eine Streifenlänge SL auf, die etwa 75% bis 98% der Länge LG der Grundplatte 12 entspricht. Dabei können diese streifenartigen Brandschutztextile 16 eine Streifenlänge SL von mindestens 100cm und eine Streifenbreite SB von mindestens 5cm aufweisen.

In dem Beispiel der Fig. 1B weist die Grundplatte 12 mehrere sich kreuzende Stützabschnitte 16 auf. Die sich kreuzenden Stützabschnitte 16 bilden dabei vieleckige, insbesondere rechteckige, Einfassungen 18. In den Einfassungen 18 sind jeweilige flächige Brandschutztextile 16 angeordnet. Dabei kann ein jeweiliges in einer Einfassung 18 angeordnetes Brandschutztextil 16 eine Textilbreite TB von mindestens 5cm und eine Textillänge TL von mindestens 15cm aufweisen.

Bei dem Kunststoffbauteil 10, das insbesondere aus einem thermoplastischen Kunststoffmaterial oder einem Verbundmaterial hergestellt sein kann, können die Stützabschnitte 14 aus glasfaserverstärktem Kunststoff hergestellt sein. Dabei können die Stützabschnitte 14 insbesondere in einem Spritzgussverfahren oder einem Fließpressverfahren mit der Grundplatte 12 ausgebildet werden. Die Stützabschnitte 14 können dabei aus dem gleichen oder einem unterschiedlichen Material hergestellt sein wie die Grundplatte 12.

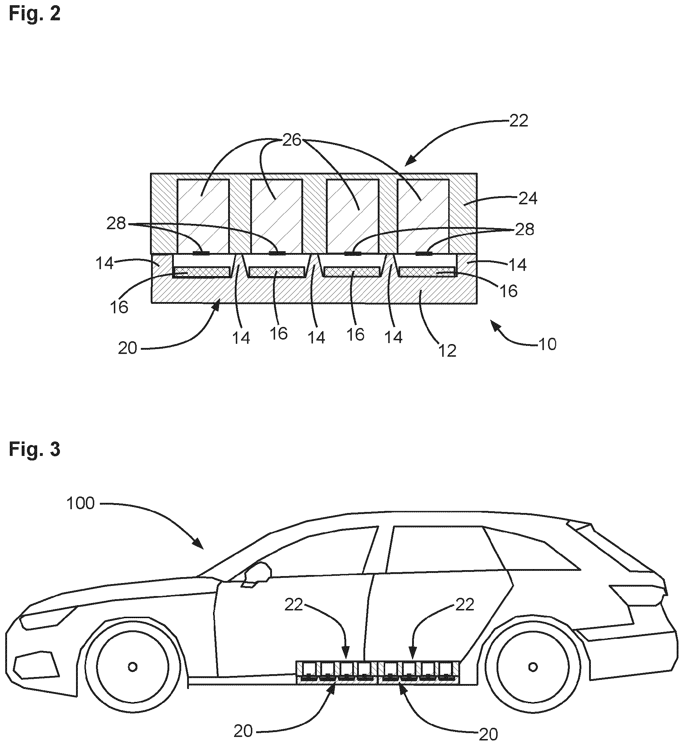

Fig. 2 zeigt in einer vereinfachten und schematischen Schnittansicht den Einsatz eines Kunststoffbauteils 10, wie es in der Fig. 1 gezeigt worden ist, als Unterfahrschutz 20 für ein zumindest teilweise elektrisch angetriebenes Kraftfahrzeug 100, das in Fig. 3 gezeigt ist.

Der Unterfahrschutz 20 bildet dabei eine untere Abdeckung für eine Batteriespeichereinrichtung 22 und ist mit dieser mittelbar oder unmittelbar verbunden. Mit anderen Worten kann der Unterfahrschutz 20 mit einem Gehäuse 24 der Batteriespeichereinrichtung direkt verbunden sein, beispielsweise materialschlüssig oder/und formschlüssig verbunden sein. Alternativ bzw. ergänzend kann der Unterfahrschutz 20 auch an Strukturbauteilen des Kraftfahrzeugs 100 befestigt sein, beispielsweise mittels Verschraubung oder dergleichen.

In dem Gehäuse 24 der Batteriespeichereinrichtung 22 sind mehrere Batteriezellen 26 aufgenommen. Die Batteriezellen 26 sind so ausgebildet, dass sie jeweils eine an einem unteren Rand angeordnete Entgasungsöffnung 28 aufweisen. Die Stützabschnitte 14 des Unterfahrschutzes 20 sind der Batteriespeichereinrichtung 22 zugewandt und an dieser abgestützt.

Der Unterfahrschutz 20 ist derart ausgeführt ist, dass jeder der nach unten ausgerichteten Entgasungsöffnungen 28 ein jeweiliges Brandschutztextil 16 gegenüber angeordnet ist oder dass mehreren nach unten ausgerichteten Entgasungsöffnungen 28 ein gemeinsames Brandschutztextil 16 gegenüber angeordnet ist.

Mit anderen Worten kann beispielsweise ein streifenartig ausgeführtes Brandschutztextil 16, wie es oben in Fig. 1A gezeigt und beschrieben worden ist, mehreren entlang des Streifens angeordneten Entgasungsöffnungen 28 von Batteriezellen 26 gegenüber liegen. Bezogen auf eine Breitenrichtung SB des Streifens können die Entgasungsöffnungen 28 mittig gegenüber dem Streifen angeordnet sein.

Alternativ kann bei mehreren rasterartig an dem Unterfahrschutz 20 angeordnete Brandschutztextilen 16 (siehe Fig. 1B) einer jeweiligen Entgasungsöffnung 28 einer Batteriezelle 26 ein flächiges Brandschutztextil 16 zugeordnet sein und gegenüber liegen. Dabei können die Entgasungsöffnungen 28 und die zugeordneten Brandschutztextile 16 insbesondere im Wesentlichen zentriert zueinander ausgerichtet sein, insbesondere so dass, die Entgasungsöffnung 28 einem gedachten Flächenschwerpunkt des Brandschutztextils 16 gegenüber liegt.

## Patentansprüche

1. Kunststoffbauteil (10) für ein zumindest teilweise elektrisch angetriebenes Kraftfahrzeug (100) mit
einer Grundplatte (12) aus einem ersten Kunststoffmaterial;
mehreren von der Grundplatte (12) vorstehenden Stützabschnitten (14), die dazu eingerichtet sind, das Kunststoffbauteil (10) an einer durch das Kunststoffbauteil (10) zu schützenden Fahrzeugkomponente (22) abzustützen;
**dadurch gekennzeichnet, dass**
das Kunststoffbauteil (10) wenigstens ein flächiges Brandschutztextil (16) aufweist, das zwischen vorstehenden Stützabschnitten (14) angeordnet und mit der Grundplatte (12) materialschlüssig verbunden ist.

2. Kunststoffbauteil (10) nach Anspruch 1, **dadurch gekennzeichnet, dass** das Brandschutztextil (16) als flächiger Streifen ausgebildet ist und eine Streifenlänge (SL) aufweist, die etwa 75% bis 98% der Länge (LG) der Grundplatte (12) entspricht.

3. Kunststoffbauteil (10) nach Anspruch 2, **dadurch gekennzeichnet, dass** der flächige Streifen eine Streifenlänge (SL) von mindestens 100cm und eine Streifenbreite von mindestens 5cm aufweist.

4. Kunststoffbauteil (10) nach Anspruch 1, **dadurch gekennzeichnet, dass** die Grundplatte (12) mehrere sich kreuzende Stützabschnitte (14) aufweist, derart dass die sich kreuzenden Stützabschnitte (14) vieleckige Einfassungen (18) bilden, wobei in mehreren oder allen Einfassungen (18) ein jeweiliges flächiges Brandschutztextil (16) angeordnet ist.

5. Kunststoffbauteil (10) nach Anspruch 4, **dadurch gekennzeichnet, dass** ein in einer Einfassung (18) angeordnetes Brandschutztextil (16) eine Textilbreite (TB) von mindestens 5cm und eine Textillänge (TL) von mindestens 15cm aufweist.

6. Kunststoffbauteil (10) nach einem der vorhergehenden Ansprüche, **dadurch gekennzeichnet, dass** die Stützabschnitte (14) aus glasfaserverstärktem Kunststoff hergestellt sind, und insbesondere in einem Spritzgussverfahren oder eine Fließpressverfahren mit der Grundplatte (12) ausgebildet sind.

7. Unterfahrschutz (20) für ein zumindest teilweise elektrisch angetriebenes Kraftfahrzeug (100), wobei der Unterfahrschutz (20) als Kunststoffbauteil (10) gemäß einem der vorhergehenden Ansprüche ausgeführt ist.

8. Kraftfahrzeug (100) mit zumindest teilweise elektrischem Antrieb und einer Batteriespeichereinrichtung (22),
wobei das Kraftfahrzeug (100) einen Unterfahrschutz (20) gemäß Anspruch 7 aufweist, der unterhalb der Batteriespeichereinrichtung (22) angeordnet und mittelbar oder unmittelbar mit dieser verbunden ist,
wobei die Stützabschnitte (14) des Unterfahrschutzes (20) der Batteriespeichereinrichtung (22) zugewandt und an dieser abgestützt sind.

9. Kraftfahrzeug (100) nach Anspruch 8, wobei die Batteriespeichereinrichtung (22) mehrere Batteriezellen (26) aufweist, die eine jeweilige Entgasungsöffnung (28) aufweisen, wobei die Entgasungsöffnungen (28) an einer Unterseite der Batteriezellen (26) angeordnet sind.

10. Kraftfahrzeug (100) nach Anspruch 9, wobei der Unterfahrschutz (20) derart ausgeführt ist, dass jeder der nach unten ausgerichteten Entgasungsöffnungen (28) ein jeweiliges Brandschutztextil (16) gegenüber angeordnet ist oder dass mehreren nach unten ausgerichteten Entgasungsöffnungen (28) ein gemeinsames Brandschutztextil (16) gegenüber angeordnet ist.

## Claims

1. Plastic component (10) for an at least partially electrically propelled motor vehicle (100) having
a base plate (12) made of a first plastic material;
several supporting portions (14) protruding from the base plate (12), which are configured to support the plastic component (10) on a vehicle component (22) which is to be protected by the plastic component (10);
**characterised in that**
the plastic component (10) has at least one two-dimensional fire protection textile (16) which is arranged between protruding supporting portions (14) and is connected material-fittingly with the base plate (12).

2. Plastic component (10) according to claim 1, **characterised in that** the fire protection textile (16) is in the form of a two-dimensional strip and has a strip length (SL) which is equal to approximately 75% to 98% of the length (LG) of the base plate (12).

3. Plastic component (10) according to claim 2, **characterised in that** the two-dimensional strip has a strip length (SL) of at least 100 cm and a strip width of at least 5 cm.

4. Plastic component (10) according to claim 1, **characterised in that** the base plate (12) has several supporting portions (14) which cross one another, such that the supporting portions (14) crossing one another form polygonal borders (18), wherein a respective two-dimensional fire protection textile (16) is arranged within several or all borders (18).

5. Plastic component (10) according to claim 4, **characterised in that** a fire protection textile (16) arranged in a border (18) has a textile width (TB) of at least 5 cm and a textile length (TL) of at least 15 cm.

6. Plastic component (10) according to any of the preceding claims, **characterised in that** the supporting portions (14) are produced from glass fiber reinforced plastic, and in particular are formed in an injection molding process or in an impact extrusion process with the base plate (12).

7. Underride protection (20) for an at least partially electrically powered motor vehicle (100), wherein the underride protection (20) is in the form of a plastic component (10) according to any of the preceding claims.

8. Motor vehicle (100) having an at least partially electric drive and a battery storage apparatus (22),
wherein the motor vehicle (100) has an underride protection (20) according to claim 7, which is arranged beneath the battery storage apparatus (22) and indirectly or directly connected thereto, wherein the supporting portions (14) of the underride protection (20) face the battery storage apparatus (22) and rest thereon.

9. Motor vehicle (100) according to claim 8, wherein the battery storage apparatus (22) has several battery cells (26) which have a respective degassing opening (28), wherein the degassing openings (28) are arranged on a bottom side of the battery cells (26).

10. Motor vehicle (100) according to claim 9, wherein the underride protection (20) is designed such that a respective fire protection textile (16) is arranged opposite to each of the degassing openings (28) aligned downwardly, or that a common fire protection textile (16) is arranged opposite to several degassing openings (28) aligned downwardly.

## Revendications

1. Composant en plastique (10) destiné à un véhicule à moteur (100) entraîné au moins partiellement électriquement avec une plaque de base (12) en une première matière plastique ;
plusieurs sections d'appui (14) faisant saillie de la plaque de base (12) qui sont configurées pour appuyer le composant en plastique (10) sur un composant de véhicule (22) à protéger par le composant en matière plastique (10) ;
**caractérisé en ce que**
le composant en plastique (10) présente au moins un textile de protection incendie (16) plat qui est disposé entre des sections d'appui (14) faisant saillie et est relié à la plaque de base (12) par liaison de matière.

2. Composant en plastique (10) selon la revendication 1, **caractérisé en ce que** le textile de protection incendie (16) est conçu comme une bande plate et présente une longueur de bande (SL) qui correspond à environ 75 % à 98 % de la longueur (LG) de la plaque de base (12).

3. Composant en plastique (10) selon la revendication 2, **caractérisé en ce que** la bande plate présente une longueur de bande (SL) d'au moins 100 cm et une largeur de bande d'au moins 5 cm.

4. Composant en plastique (10) selon la revendication 1, **caractérisé en ce que** la plaque de base (12) présente plusieurs sections d'appui (14) s'entrecroisant de telle sorte que les sections d'appui (14) s'entrecroisant forment des bordures polygonales (18), dans lequel un textile de protection incendie (16) plat respectif est disposé dans plusieurs ou toutes les enceintes (18).

5. Composant en plastique (10) selon la revendication 4, **caractérisé en ce qu'**un textile de protection incendie (16) disposé dans une bordure (18) présente une largeur de textile (TB) d'au moins 5 cm et une longueur de textile (TL) d'au moins 15 cm.

6. Composant en plastique (10) selon l'une quelconque des revendications précédentes, **caractérisé en ce que** les sections d'appui (14) sont fabriquées à partir d'une plastique renforcé de fibres de verre et sont conçues en particulier selon un procédé de moulage par injection ou un procédé de formage par extrusion avec la plaque de base (12).

7. Protection de bas de caisse (20) destinée à un véhicule à moteur (100) entraîné au moins partiellement électriquement, dans laquelle la protection de bas de caisse (20) est réalisée comme un composant en plastique (10) selon l'une quelconque des revendications précédentes.

8. Véhicule à moteur (100) présentant un entraînement au moins partiellement électrique et un appareil de stockage sur batterie (22),
dans lequel le véhicule à moteur (100) présente une protection de bas de caisse (20) selon la revendication 7 qui est disposée en dessous de l'appareil de stockage sur batterie (22) et est reliée directement ou indirectement avec celui-ci, dans lequel les sections d'appui (14) de la protection de bas de caisse (20) sont tournées vers l'appareil de stockage sur batterie (22) et s'appuient sur celui-ci.

9. Véhicule à moteur (100) selon la revendication 8, dans lequel l'appareil de stockage sur batterie (22) présente plusieurs cellules de batterie (26) qui présentent une ouverture de dégazage (28), dans lequel les ouvertures de dégazage (28) sont disposées sur un côté inférieur des cellules de batterie (26).

10. Véhicule à moteur (100) selon la revendication 9, dans lequel la protection de bas de caisse (20) est réalisée de telle sorte qu'un textile de protection incendie (16) respectif est disposé en face de chacune des ouvertures de dégazage (28) orientées vers le bas ou en ce qu'un textile de protection incendie (16) commun est disposé en face de plusieurs ouvertures de dégazage (28) orientées vers le bas.
